# EUROPÄISCHE PATENTSCHRIFT

(11) **EP 2 744 680 B1**
(45) Veröffentlichungstag und Bekanntmachung des Hinweises auf die Patenterteilung: **07.11.2018**
(21) Anmeldenummer: 12758752.5
(22) Anmeldetag: 16.08.2012
(51) Int. Cl.: B60K 37/04

(54) **ANZEIGEVORRICHTUNG FÜR EIN FAHRZEUG**
DISPLAY DEVICE FOR A VEHICLE
DISPOSITIF D'AFFICHAGE POUR UN VÉHICULE

(30) Priorität: 20.08.2011 DE 102011111578
(43) Veröffentlichungstag der Anmeldung: 25.06.2014
(73) Patentinhaber: Volkswagen Aktiengesellschaft, 38440 Wolfsburg (DE)
(72) Erfinder: TRABUCCO, Luigi, 38442 Wolfsburg (DE)
(86) Internationale Anmeldenummer: PCT/EP2012/003487
(87) Internationale Veröffentlichungsnummer: WO 2013/026550

(56) Entgegenhaltungen:
- US-A1- 2006 164 230

## Beschreibung

Die vorliegende Erfindung betrifft Verfahren für eine Anzeigevorrichtung eines Fahrzeugs und Anzeigevorrichtungen für ein Fahrzeug. Die vorliegende Erfindung betrifft insbesondere Anzeigevorrichtungen, welche in einem Armaturenbrett des Fahrzeugs zur Anzeige von Statusinformationen des Fahrzeugs für einen Fahrer des Fahrzeugs vorgesehen sein können.

Bei Fahrzeugen, beispielsweise Personenkraftwagen oder Lastkraftwagen, werden klassische Rundinstrumente in einem Kombiinstrument, beispielsweise ein Tachometer oder ein Drehzahlmesser, zunehmend durch so genannte frei programmierbare Kombiinstrumente ersetzt, welche beispielsweise eine frei programmierbare Matrixanzeige in einer Plasma- oder LCD-Technologie umfassen. Dadurch wird es möglich, neben einer Darstellung klassischer Rundinstrumente beliebige weitere graphische Informationen darzustellen, beispielsweise Informationen eines Navigationssystems oder eines Abstandwarnsystems des Fahrzeugs. Für klassische Kontrollleuchten, beispielsweise eine Handbremsleuchte, eine Kühlmittelwarnleuchte, eine Bremsbelagsverschleißleuchte oder Blinkerleuchten, welche bei Kombiinstrumenten mit klassischen Rundinstrumenten beispielsweise innerhalb der Rundinstrumente angeordnet waren, ist daher bei frei programmierbaren Kombiinstrumenten häufig kein Platz mehr vorhanden.

In dem Stand der Technik sind eine Vielzahl von Verbesserungen für Anzeige- und Bedieneinheiten eines Fahrzeugs bekannt. Beispielsweise betrifft die DE 10 2008 064 265 A1 ein Verfahren und eine Vorrichtung zum Ansteuern einer Anzeigeeinheit in einem Fahrzeug. Bei dem Verfahren wird eine Farbe einer Hintergrundbeleuchtung und/oder einer Beleuchtung einer Umrandung der Anzeigeeinheit in Abhängigkeit erfasster Eingangssignale geändert, beispielsweise in Abhängigkeit von Navigationsinformationen, Informationen eines Telematiksystems, erfassten Informationen von Witterungseinflüssen oder bei an ein Fahrzeugbordnetz gekoppelten externen Komponenten. Eine Beleuchtung der Umrandung wird auch als "Ambient Light" bezeichnet. Hierzu können in einem Randbereich der Anzeigeeinheit bzw. in der Umrandung beispielsweise Leuchtdioden angeordnet sein. Weiterhin ist aus der DE 10 2008 049 040 A1 eine Einrichtung zur Hinterleuchtung eines Interieurteils für ein Kraftfahrzeug bekannt. Eine Blende für beispielsweise ein Klimabediengerät, bestehend aus einem Leuchtmittel und einem mit dem Leuchtmittel zusammen wirkenden Lichtleitelement, ist indirekt beleuchtet und das Lichtleitelement ist derart eingebaut, dass es für den Bediener nicht sichtbar ist. Bei einer Ausführungsform ist das Lichtleitelement zwischen zwei Blendenteilen angeordnet, wobei zwischen dem ersten und dem zweiten Blendenteil ein Spalt vorhanden ist, der mittels des Lichtleitelements ausgeleuchtet wird.

Aus der KR 2010 0050739 A ist eine Beleuchtung, eine sogenannte Mood-Beleuchtung, für eine Fahrzeuginstrumententafel bekannt, um eine Erkennbarkeit eines Anzeigesystems, wie zum Beispiel einem Tachometer, ohne zusätzliche Lichtquelle zu verbessern. Ein Skalenblock weist ein Anzeigesystem auf, welches Fahrinformationen eines Fahrzeugs anzeigt. Eine Beleuchtungseinheit ist auf der Rückseite des Skalenblocks angeordnet. Eine Fensterplatte integriert den Skalenblock und die Beleuchtungseinheit und bildet ein Blendenteil, welches die Unterseite des Skalenblocks bedeckt. Eine Mood-Beleuchtungsübertragungsstruktur ist geformt, um der Innenseite des Blendenteils der Fensterplatte zu entsprechen.

Aus der gattungsbildenden US 2006/0164230 A1 ist ein Bildschirm bekannt, der in einen Innenspiegel eines Fahrzeugs integriert ist. Der Bildschirm kann relativ zu dem Gehäuse des Innenspiegels bewegt werden; so lässt er sich in das Gehäuse einfahren, wenn er nicht benötigt wird, oder seitlich ausfahren, wenn er benötigt wird. Das Einfahren und Ausfahren kann automatisch mit Hilfe eines Motors erfolgen; der Motor wird dabei in Abhängigkeit eines Signals gesteuert; beispielsweise wird der Bildschirm ausgefahren, wenn der Rückwärtsgang eingelegt wird, um für ein Assistenzsystem bereit zu stehen.

Aufgabe der vorliegenden Erfindung ist es daher, eine verbesserte und übersichtlichere Anzeige von Informationen insbesondere im direkten Sichtbereich eines Fahrers eines Fahrzeugs, also im Bereich des Kombiinstruments, bereitzustellen.

Gemäß der vorliegenden Erfindung wird diese Aufgabe durch ein Verfahren für eine Anzeigevorrichtung eines Fahrzeugs nach Anspruch 1, eine Anzeigevorrichtung für ein Fahrzeug nach Anspruch 3 und ein Fahrzeug nach Anspruch 6 gelöst. Die abhängigen Ansprüche definieren bevorzugte und vorteilhafte Ausführungsformen der Erfindung.

Erfindungsgemäß wird ein Verfahren für eine Anzeigevorrichtung eines Fahrzeugs bereitgestellt, welche eine Anzeigefläche umfasst, die zwischen einer ersten Position und einer zweiten Position beweglich ist. Bei dem Verfahren wird ein Betriebszustand des Fahrzeugs erfasst und die Anzeigefläche in Abhängigkeit von dem erfassten Betriebszustand des Fahrzeugs automatisch in die erste Position oder in die zweite Position bewegt.

Die Anzeigevorrichtung weist eine Umrandung auf, welche die Anzeigefläche zumindest teilweise umgibt. Die Anzeigefläche ragt in der zweiten Position aus der Umrandung hervor, sodass in der zweiten Position ein seitlicher Rand der Anzeigefläche zwischen der Anzeigefläche und der Umrandung verläuft. Der seitliche Rand weist ein Leuchtmittel auf und gemäß dem Verfahren wird das Leuchtmittel am seitlichen Rand in Abhängigkeit von dem Betriebszustand des Fahrzeugs angesteuert. Beispielsweise kann das Leuchtmittel am seitlichen Rand als so genannte Ambientebeleuchtung des Fahrzeugs aktiviert werden, sobald das Fahrzeug entriegelt wird oder ein Zündstromkreislauf des Fahrzeugs geschlossen wird. Weiterhin kann das Leuchtmittel am seitlichen Rand in Abhängigkeit von einem Betrieb eines Blinkers oder Fahrtrichtungsanzeigers des Fahrzeugs angesteuert werden. Wenn beispielsweise zwei der zuvor beschriebenen Anzeigevorrichtungen vorhanden sind, wobei eine Anzeigevorrichtung links von dem Kombiinstrument und eine Anzeigevorrichtung rechts von dem Kombiinstrument angeordnet ist, kann das Leuchtmittel am seitlichen Rand bei einer Betätigung des Fahrtrichtungsanzeigers oder einer Warnblinkanlage des Fahrzeugs im Takt der Blinker ein und ausgeschaltet werden. Beispielsweise kann bei einer Betätigung des Fahrtrichtungsanzeigers nach links das Leuchtmittel der Anzeigevorrichtung an der linken Seite des Kombiinstruments angesteuert werden und bei einer Betätigung des Fahrtrichtungsanzeigers nach rechts das Leuchtmittel der an der rechten Seite des Kombiinstruments angeordneten Anzeigevorrichtung angesteuert werden. Dadurch können die klassischen Blinkerkontrollleuchten im Kombiinstrument fallen und darüber hinaus kann die Blinkeranzeige durch das Leuchtmittel der Anzeigevorrichtung deutlicher erkennbar sein als das klassische Blinkersymbol. Darüber hinaus sind die Leuchtmittel der beiden Anzeigevorrichtungen weiter Außen angebracht, wodurch ein Unterschied zwischen Blinken nach rechts und Blinken nach links deutlicher wird.

Auf der Anzeigefläche können beispielsweise Symbole klassischer Kontrollleuchten angeordnet sein, beispielsweise eine Handbremsenkontrollleuchte, eine Kühlmittelkontrollleuchte, eine ABS-Kontrollleuchte, eine ESP-Kontrollleuchte oder eine Öldruckkontrollleuchte. Die Symbole auf der Anzeigefläche können individuell mit entsprechenden Leuchtmitteln, beispielsweise Glühlampen oder Leuchtdioden (LED), hinterleuchtet werden. Die Leuchtmittel können beispielsweise zusammen mit der Anzeigefläche bewegt werden oder ortsfest in der Anzeigevorrichtung angeordnet sein, sodass sich nur die Anzeigefläche mit den darauf angeordneten lichtdurchlässigen Symbolen bewegt. Weiterhin kann die Anzeigefläche auch eine frei programmierbare Anzeige, beispielsweise ein frei programmierbares LCD, umfassen. Die Anzeigevorrichtung kann beispielsweise benachbart am Rand eines Kombiinstruments, insbesondere eines frei programmierbaren Kombiinstruments, angeordnet sein. Insbesondere kann die Anzeigevorrichtung seitlich rechts oder links von dem Kombiinstrument angeordnet sein. Durch das automatische Bewegen der Anzeigefläche zwischen der ersten Position und der zweiten Position wird die Aufmerksamkeit des Fahrers auf die Anzeigevorrichtung gelenkt, wodurch der Fahrer den darauf dargestellten Informationen eine höhere Aufmerksamkeit zukommen lassen kann.

Gemäß einer Ausführungsform umfasst der Betriebszustand einen Verriegelungszustand des Fahrzeugs, einen Zustand eines Zündstromkreises des Fahrzeugs, einen Zustand der Sitzbelegung des Fahrzeugs oder einen Fahrprogrammzustand des Fahrzeugs. Beispielsweise kann die Anzeigefläche bei der Bewegung von der ersten Position in die zweite Position auf den Fahrer des Fahrzeugs zubewegt werden. Im verriegelten Zustand des Fahrzeugs kann sich die Anzeigefläche beispielsweise in der ersten Position befinden und bei einem Entriegeln des Fahrzeugs kann die Anzeigefläche in die zweite Position bewegt werden. Gleichzeitig kann beispielsweise eine Hintergrundbeleuchtung des Kombiinstruments eingeschaltet oder langsam hochgefahren werden. Durch die Bewegung der Anzeigefläche kann somit ein "Erwachen" des Fahrzeugs symbolisiert werden. Alternativ kann die Anzeigefläche beispielsweise in Abhängigkeit des Zustands des Zündstromkreises des Fahrzeugs zwischen der ersten und er zweiten Position bewegt werden. Bei abgeschalteter Zündung kann sich die Anzeigefläche beispielsweise in der ersten Position befinden und beim Einschalten der Zündung kann die Anzeigefläche in die zweite Position bewegt werden. Dadurch kann wiederum ein "Erwachen" des Fahrzeugs symbolisiert werden und darüber hinaus eine "Begrüßung" des Fahrers symbolisiert werden. Anstelle des Zündstromkreises kann eine derartige Begrüßung auch in Abhängigkeit einer Sitzbelegung des Fahrzeugs erfolgen. Schließlich kann die Anzeigefläche in Abhängigkeit einer Änderung eines Fahrprogramms des Fahrzeugs zwischen der ersten und der zweiten Position bewegt werden. Beispielsweise kann sich die Anzeigefläche in der ersten Position befinden, wenn der Fahrer ein Normal- oder Economy-Fahrprogramm ausgewählt hat, und automatisch in die zweite Position bewegt werden, wenn der Fahrer ein Sportprogramm auswählt. Durch das Bewegen der Anzeigefläche in die zweite Position auf den Fahrer zu kann ein sportlicher Charakter des Kombiinstruments unterstrichen werden.

Gemäß einer Ausführungsform ist die Anzeigefläche der Anzeigevorrichtung quer zu einer Anzeigefläche des Kombiinstruments beweglich. Dadurch bewegt sich aus Sicht eines Fahrers des Fahrzeugs die Anzeigefläche bei einer Bewegung von der ersten Position in die zweite Position auf den Fahrer zu. Dadurch kann die Beachtung der Anzeigeflächen durch den Fahrer erhöht werden und eine Begrüßung des Fahrers symbolisiert werden. Die Anzeigefläche kann in der ersten Position im Wesentlichen bündig zu der Umrandung ausgerichtet sein und in der zweiten Position in einer Richtung im Wesentlichen senkrecht zu der Anzeigefläche aus der Umrandung hervorragen. Die Anzeigefläche der Anzeigevorrichtung kann beispielsweise im Wesentlichen parallel zu einer Anzeigefläche des Kombiinstruments ausgerichtet sein. Beispielsweise kann die Anzeigefläche der Anzeigevorrichtung innerhalb eines Bereichs von +/-30° zu der Anzeigefläche des Kombiinstruments ausgerichtet sein.

Darüber hinaus bietet die Anzeigefläche zusätzlichen Platz zum Darstellen von Informationen, insbesondere zum Darstellen von klassischen Warnleuchten, sodass diese Informationen nicht auf einem frei programmierbaren Kombiinstrument dargestellt werden müssen, wodurch auf dem frei programmierbaren Kombiinstrument graphische Informationen von beispielsweise einem Navigationssystem angezeigt werden können.

Gemäß der vorliegenden Erfindung wird weiterhin eine Anzeigevorrichtung für ein Fahrzeug bereitgestellt, welche eine Anzeigefläche, eine Antriebseinheit und eine Steuervorrichtung umfasst. Die Anzeigefläche ist zwischen einer ersten Position und einer zweiten Position beweglich. Die Antriebseinheit ist mit der Anzeigefläche gekoppelt und ausgestaltet, die Anzeigefläche wahlweise in die erste Position oder in die zweite Position zu bewegen. Die Steuervorrichtung ist mit der Antriebseinheit gekoppelt und ausgestaltet, einen Betriebszustand des Fahrzeugs zu erfassen und in Abhängigkeit von dem erfassten Betriebszustand des Fahrzeugs die Antriebseinheit anzusteuern, um die Anzeigefläche in die ersten Position oder in die zweite Position zu bewegen. Die Anzeigevorrichtung weist eine Umrandung auf, welche die Anzeigefläche zumindest teilweise umgibt. Die Anzeigefläche ragt in der zweiten Position aus der Umrandung hervor, sodass in der zweiten Position ein seitlicher Rand der Anzeigefläche zwischen der Anzeigefläche und der Umrandung verläuft. Der seitliche Rand weist ein Leuchtmittel auf und gemäß der Anzeigevorrichtung ist das Leuchtmittel am seitlichen Rand in Abhängigkeit von dem Betriebszustand des Fahrzeugs ansteuerbar. Die Anzeigevorrichtung ist somit zum Durchführen des zuvor beschriebenen Verfahrens oder einer seiner Ausführungsformen geeignet und umfasst daher auch die zuvor beschriebenen Vorteile.

Gemäß der vorliegenden Erfindung wird ein weiteres Verfahren für eine Anzeigevorrichtung eines Fahrzeugs bereitgestellt. Die Anzeigevorrichtung weist eine Anzeigefläche und eine Umrandung auf. Die Umrandung umgibt die Anzeigefläche zumindest teilweise. Die Anzeigefläche ragt aus her Umrandung hervor, sodass ein seitlicher Rand der Anzeigefläche zwischen der Anzeigefläche und der Umrandung verläuft. Der seitliche Rand umfasst ein Leuchtmittel. Bei dem Verfahren wird das Leuchtmittel am seitlichen Rand in Abhängigkeit von einem Betrieb eines Blinkers oder Fahrtrichtungsanzeigers oder einer Warnblinkanlage des Fahrzeugs angesteuert. Dieses Verfahren unterscheidet sich somit von dem zuvor beschriebenen Verfahren dadurch, dass die Anzeigefläche nicht beweglich ist, sondern in einer hervorragenden Position fest angeordnet ist. Wie zuvor beschrieben kann durch die Verwendung des Leuchtmittels am seitlichen Rand als Blinkerkontrollleuchte der Blinker anders inszeniert werden und ist deutlicher erkennbar. Darüber hinaus kann das Leuchtmittel am seitlichen Rand auch als Ambientebeleuchtung verwendet werden.

Gemäß der vorliegenden Erfindung wird eine weitere Anzeigevorrichtung für ein Fahrzeug bereitgestellt, welche eine Anzeigefläche, eine Umrandung und eine Steuervorrichtung umfasst. Die Anzeigefläche ist zumindest teilweise von der Umrandung umgeben. Die Anzeigefläche ragt aus der Umrandung hervor und ein seitlicher Rand der Anzeigefläche verläuft zwischen der Anzeigefläche und der Umrandung. Der seitliche Rand umfasst ein Leuchtmittel. Die Steuervorrichtung ist mit dem Leuchtmittel gekoppelt und derart ausgestaltet, dass sie das Leuchtmittel in Abhängigkeit von einem Betrieb eines Blinkers des Fahrzeugs ansteuert. Somit ergeben sich für diese Anzeigevorrichtung die gleichen Vorteile, wie sie im Zusammenhang mit dem vorhergehenden Verfahren bereits beschrieben wurden.

Erfindungsgemäß wird schließlich ein Fahrzeug bereitgestellt, welches ein Kombiinstrument und eine Vorrichtung, wie sie zuvor beschrieben wurde, umfasst. Die Anzeigevorrichtung ist benachbart zu dem Kombiinstrument angeordnet. Vorzugsweise umfasst das Fahrzeug zwei Anzeigevorrichtungen, wobei eine Anzeigevorrichtung seitlich rechts an dem Kombiinstrument angeordnet ist und eine weitere Anzeigevorrichtung seitlich links an dem Kombiinstrument angeordnet ist. Dadurch ist eine besonders vorteilhafte Nutzung des Leuchtmittels am seitlichen Rand der Anzeigevorrichtungen als Blinkerkontrollleuchten möglich.

Die vorliegende Erfindung wird nachfolgend unter Bezugnahme auf die Zeichnungen im Detail beschrieben werden.
Fig. 1 zeigt schematisch eine perspektivische Darstellung einer Anzeigevorrichtung gemäß einer Ausführungsform der vorliegenden Erfindung in einem Armaturenbrett eines Fahrzeugs.
Fig. 2 zeigt eine weitere perspektivische Darstellung der Anzeigevorrichtung der Fig. 1.
Fig. 3 zeigt schematisch eine Draufsicht einer Anzeigevorrichtung gemäß einer Ausführungsform der vorliegenden Erfindung.
Fig. 4 zeigt eine Schnittansicht der Anzeigevorrichtung der Fig. 3 in einer ersten Position.
Fig. 5 zeigt eine Schnittansicht der Anzeigevorrichtung der Fig. 3 in einer zweiten Position.
Fig. 6 zeigt ein Fahrzeug mit einer Anzeigevorrichtung gemäß einer Ausführungsform der vorliegenden Erfindung.

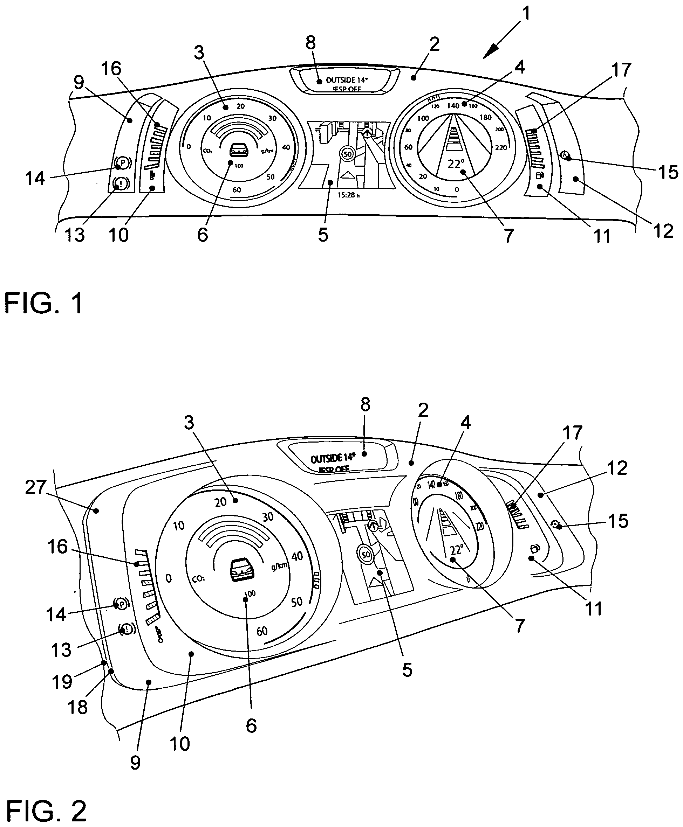

Fig. 1 zeigt einen Ausschnitt eines Armaturenbretts 1 eines Fahrzeugs mit einem Kombiinstrument 2. Das Kombiinstrument 2 ist beispielsweise ein sogenanntes frei programmierbares Kombiinstrument, auf welchem beliebige graphische und textuelle Ausgaben dargestellt werden können. Das Kombiinstrument 2 kann jedoch auch ein herkömmliches Kombiinstrument mit Rundinstrumenten sein. Darüber hinaus kann das Kombiinstrument 2 auch eine Kombination aus einem frei programmierbaren Bereich und Rundinstrumenten sein. Auf dem Kombiinstrument 2 werden in Fig. 1 beispielsweise ein Drehzahlmesser 3 und ein Geschwindigkeitsmesser 4 mit Rundskalen dargestellt. Zwischen dem Drehzahlmesser 3 und dem Geschwindigkeitsmesser 4 befindet sich ein Ausgabebereich 5 eines Navigationssystems. Innerhalb des Drehzahlmessers 3 ist eine CO2-Ausstoßanzeige 6 und innerhalb des Geschwindigkeitsmessers 4 ist eine Abstandswarnanzeige 7 vorgesehen. In einem Textfeld 8 werden beispielsweise eine Außentemperatur und weitere aktuelle Informationen, wie zum Beispiel, dass ein ESP ausgeschaltet ist, dargestellt. Bei einem derartigen frei programmierbaren Kombiinstrument 2 kann die Anordnung der angezeigten Komponenten 3-8 und die Auswahl der angezeigten Komponenten in Abhängigkeit von einer Benutzerauswahl oder einem Betriebszustand des Fahrzeugs verändert werden.

Rechts und links neben dem Kombiinstrument 2 befinden sich weitere Anzeigevorrichtungen 9-12. Auf der Anzeigevorrichtung 9 sind mehrere Symbole 13, 14 vorgesehen, welche beispielsweise mit dahinter angeordneten LEDs hinterleuchtet werden können. Das Symbol 14 stellt beispielsweise eine Handbremskontrollleuchte dar, welche hinterleuchtet wird, wenn eine Handbremse des Fahrzeugs angezogen ist. Auf der Anzeigevorrichtung 12 sind ebenfalls hinterleuchtbare Symbole angeordnet, beispielsweise ein Symbol 15, welches anzeigt, dass ein Navigationssystem des Fahrzeugs aktiv ist. Auf der Anzeigevorrichtung 10 sind mehrere hinterleuchtbare Balken angeordnet, welche in Abhängigkeit von einer Kühlmitteltemperatur des Fahrzeugs hinterleuchtet werden. Auf der Anzeigevorrichtung 11 sind mehrere hinterleuchtbare Balken angeordnet, welche in Abhängigkeit eines Füllstands eines Kraftstofftanks des Fahrzeugs hinterleuchtet werden.

Die Anzeigevorrichtungen 9-11 sind in einer im Wesentlichen senkrechten Richtung zu der Anzeigefläche, auf welcher die Symbole oder Balken 13-17 angeordnet sind, beweglich. Die Anzeigeflächen der Anzeigevorrichtungen 9-12 können somit auf einen Fahrer des Fahrzeugs zubewegt oder von ihm wegbewegt werden. Nachfolgend wird eine Position der Anzeigevorrichtungen 9-12, in welcher die Anzeigeflächen der Anzeigevorrichtungen 9-12 von dem Fahrer wegbewegt sind, als erste Position bezeichnet werden und eine Position, in welcher die Anzeigeflächen der Anzeigevorrichtungen 9-12 auf den Fahrer zubewegt worden sind, als zweite Position bezeichnet werden. Ein Bewegungshub zwischen der ersten Position und der zweiten Position kann mehrere Millimeter betragen, beispielsweise zwei bis drei Millimeter. Eine Bewegung der Anzeigeflächen der Anzeigevorrichtungen 9-12 zwischen der ersten und der zweiten Position kann beispielsweise mit Hilfe eines elektrischen Antriebs erfolgen. In der in Fig. 1 gezeigten Ausführungsform sind die Anzeigeflächen der Anzeigevorrichtungen 9 und 10 zueinander versetzt. Die Anzeigefläche der Anzeigevorrichtung 9 ragt etwas weiter in Richtung des Fahrers hervor als die Anzeigefläche der Anzeigevorrichtung 10. Ebenso sind die Anzeigeflächen der Anzeigevorrichtungen 11 und 12 zueinander versetzt. Die Anzeigeflächen der Anzeigevorrichtungen 9 und 10 können gemeinsam oder getrennt voneinander zwischen der ersten Position und der zweiten Position bewegt werden. Ebenso können die Anzeigeflächen der Anzeigevorrichtungen 11 und 12 gemeinsam oder getrennt zwischen der ersten und der zweiten Position bewegt werden. Es können aber auch alle Anzeigeflächen gemeinsam bewegt werden.

Das Bewegen der Anzeigeflächen der Anzeigevorrichtungen 9-12 zwischen der ersten und der zweiten Position kann in Abhängigkeit von Betriebszuständen des Fahrzeugs erfolgen, wie nachfolgend beschrieben werden wird. Darüber hinaus können gleichzeitig mit der Bewegung der Anzeigeflächen der Anzeigevorrichtungen 9-12 weitere Informationen auf dem Kombiinstrument 2 angezeigt werden. Beispielsweise können die Anzeigeflächen der Anzeigevorrichtungen 9-12 im abgeschalteten und verriegelten Zustand des Fahrzeugs in der ersten Position angeordnet sein. Bei einem Öffnen des Fahrzeugs oder bei einem Aktivieren einer Zündung des Fahrzeugs oder bei einer Erkennung einer Sitzbelegung eines Fahrsitzes des Fahrzeugs können die Anzeigeflächen der Anzeigevorrichtungen 9-12 von der ersten Position in die zweite Position bewegt werden. Gleichzeitig können beispielsweise der Drehzahlmesser 3 und der Geschwindigkeitsmesser 4 auf dem Kombiinstrument dargestellt werden. Somit kann durch das Herausfahren der Anzeigeflächen der Anzeigevorrichtungen 9-12 und das schrittweise Aktivieren von Anzeigen auf dem Kombiinstrument 2 ein "Aktivieren" oder "Aufwachen" des Fahrzeugs symbolisiert werden.

Die Anzeigevorrichtungen 9-12 dienen neben der Informationsanzeige der darauf angeordneten Symbole gleichzeitig als seitliche Begrenzung des Kombiinstruments 2 und können insgesamt gegenüber dem Kombiinstrument 2 in Richtung des Fahrers versetzt angeordnet sein und dienen somit als eine Vorblende für das Kombiinstrument 2.

Fig. 2 zeigt das Kombiinstrument 2 und die Anzeigevorrichtungen 9-12 der Fig. 1 in einer seitlichen perspektivischen Darstellung. Die Anzeigevorrichtungen 9-12 befinden sich in der zweiten Position, d.h., die Anzeigevorrichtungen 9-12 sind in Richtung eines Innenraums des Fahrzeugs bzw. in Richtung eines Fahrers des Fahrzeugs herausgefahren. Dadurch ergibt sich, dass ein äußerer Rand 18 der Anzeigevorrichtung 9 zwischen einer Umrandung 19, welche die Anzeigevorrichtung 9 seitlich umgibt, freigesetzt wird. Der Rand 18 erstreckt sich zwischen der Umrandung 19 und der Anzeigefläche 27 der Anzeigevorrichtung 9. Der Rand 18 entspricht beispielsweise dem Hub zwischen der ersten Position und der zweiten Position der Anzeigevorrichtung 9, also beispielsweise mehrere Millimeter. Der Rand 18 kann mit einem Leuchtmittel versehen sein, welches Licht seitlich abstrahlt. Die Anzeigevorrichtung 12 auf der rechten Seite des Kombiinstruments 2 kann ebenfalls einen entsprechenden Rand mit einem entsprechenden Leuchtmittel aufweisen. Wenn sich die Anzeigevorrichtungen 9-12 in der zweiten Position befinden, können die Leuchtmittel am Rand 18 der Vorrichtungen 9 und 12 einerseits als sogenannte Ambientebeleuchtung dienen und andererseits als Kontrollleuchten für einen Fahrtrichtungsanzeiger oder eine Warnblinkanlage des Fahrzeugs dienen. Bei Betätigung eines Fahrtrichtungsanzeigers des Fahrzeugs nach links kann das Leuchtmittel in dem Rand 18 derart angesteuert werden, dass es im Takt eines linken Blinkers des Fahrzeugs blinkt und somit dem Fahrer des Fahrzeugs anzeigt, dass der Blinker nach links gesetzt ist. Ebenso kann das Leuchtmittel an dem Rand der Anzeigevorrichtung 12 als Kontrollleuchte für einen gesetzten Fahrtrichtungsanzeiger nach rechts dienen.

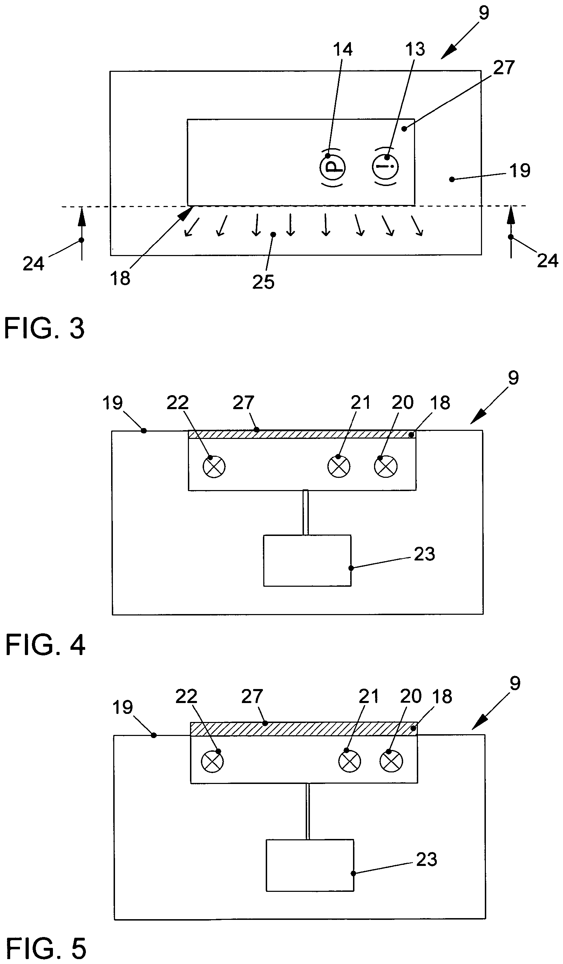

Fig. 3 zeigt eine schematische Draufsicht der Anzeigevorrichtung 9. Auf der Anzeigefläche 27 der Anzeigevorrichtung 9 sind die hinterleuchtbaren Symbole 13 und 14 gezeigt. Die Umrandung 19 umgibt die Anzeigevorrichtung 9. Wie zuvor beschrieben, ist die Anzeigevorrichtung 9 zwischen einer ersten Position und einer zweiten Position beweglich, wobei sich die Anzeigevorrichtung 9 bei einer Bewegung zwischen der ersten Position und der zweiten Position im Wesentlichen senkrecht zu der Zeichenebene der Fig. 3 bewegt. Wenn sich die Anzeigevorrichtung 9 in der zweiten Position befindet, steht der Rand 18, welcher mit einem Leuchtmittel versehen ist, über die Umrandung 19 hervor, sodass Licht von dem Leuchtmittel des Rands 18 seitlich abgestrahlt werden kann, wie es durch die Pfeile 25 in der Fig. 3 dargestellt ist. Schnittzeichnungen der Anzeigevorrichtung 9 entlang der in Fig. 3 gestrichelt eingezeichneten Schnittebene aus Sicht der Pfeile 24 sind in Figuren 4 und 5 dargestellt.

In Fig. 4 befindet sich die Anzeigevorrichtung 9 in der ersten Position, d.h. die Anzeigefläche 27, auf welcher die hinterleuchtbaren Symbole 13 und 14 angeordnet sind, ist im Wesentlichen bündig zu der Umrandung 19 ausgerichtet. Das Leuchtmittel an dem Rand 18 ist daher innerhalb der Umrandung 19 versenkt angeordnet. In Fig. 4 sind weiterhin Leuchten 20 und 21 gezeigt, welche zur Hinterleuchtung der Symbole 13 und 14 dienen. Leuchte 22 kann zur Beleuchtung des Rands 18 dienen. Weiterhin ist symbolisch ein Antrieb 23 dargestellt, welcher die Anzeigefläche 27 der Anzeigevorrichtung 9 zwischen der in Fig. 4 gezeigten ersten Position und der in Fig. 5 gezeigten zweiten Position bewegen kann.

In Fig. 5 ist die Anzeigevorrichtung 9 mit Hilfe des Antriebs 23 in die zweite Position bewegt worden, in welcher der Rand 18 über die Umrandung 19 hinaus ragt, sodass Licht von der Leuchte 22 über beispielsweise einen Lichtleiter im Rand 18 seitlich von dem Rand 18 der Anzeigevorrichtung 9 austreten kann, wie es in Fig. 3 gezeigt ist.

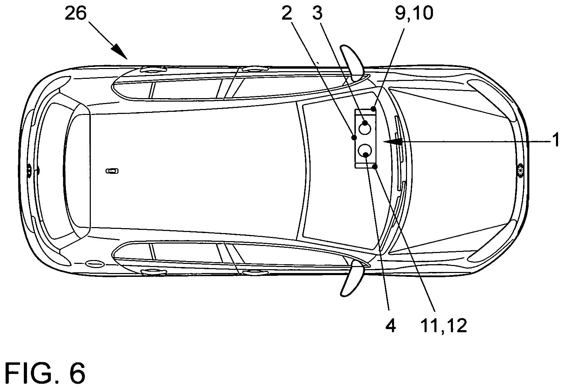

Fig. 6 zeigt schließlich ein Fahrzeug 26 mit einem Armaturenbrett 1, in welchem das Kombiinstrument 2 mit dem Drehzahlmesser 3 und dem Geschwindigkeitsmesser 4 angeordnet ist. Seitlich links von dem Kombiinstrument 2 sind die Anzeigevorrichtungen 9 und 10 angeordnet und seitlich rechts von dem Kombiinstrument 2 sind die Anzeigevorrichtungen 11 und 12 angeordnet.

## Patentansprüche

1. Verfahren für eine Anzeigevorrichtung eines Fahrzeugs, wobei die Anzeigevorrichtung (9-12) eine Anzeigefläche (27) umfasst, weiche zwischen einer ersten Position und einer zweiten Position beweglich ist, wobei das Verfahren umfasst:
- Erfassen eines Betriebszustands des Fahrzeugs (26), und
- automatisches Bewegen der Anzeigefläche (27) in die erste Position oder in die zweite Position in Abhängigkeit von dem erfassten Betriebszustand des Fahrzeugs (26),
**dadurch gekennzeichnet, dass**
die Anzeigevorrichtung (9-12) eine Umrandung (19) aufweist, welche die Anzeigefläche (27) zumindest teilweise umgibt, wobei die Anzeigefläche (27) in der zweiten Position aus der Umrandung (19) hervorragt, wobei in der zweiten Position ein seitlicher Rand (18) der Anzeigefläche (27) zwischen der Anzeigefläche (27) und der Umrandung (19) verläuft, wobei der seitliche Rand (18) ein Leuchtmittel umfasst, wobei das Verfahren ferner umfasst:
- Ansteuern des Leuchtmittels in Abhängigkeit von dem Betriebszustand des Fahrzeugs (26).

2. Verfahren nach Anspruch 1, wobei das Leuchtmittel in Abhängigkeit von einem Betrieb eines Blinkers des Fahrzeugs (26) angesteuert wird.

3. Anzeigevorrichtung für ein Fahrzeug, umfassend:
- eine Anzeigefläche (27), welche zwischen einer ersten Position und einer zweiten Position beweglich ist,
- eine Antriebseinheit (23), welche mit der Anzeigefläche (27) gekoppelt ist und ausgestaltet ist, die Anzeigefläche (27) wahlweise in die erste oder zweite Position zu bewegen, und
- eine Steuervorrichtung, welche mit der Antriebseinheit (23) gekoppelt ist und ausgestaltet ist, einen Betriebszustand des Fahrzeugs (26) zu erfassen und in Abhängigkeit von dem erfassten Betriebszustand des Fahrzeugs (26) die Antriebseinheit (23) anzusteuern, um die Anzeigefläche (27) in die erste Position oder in die zweite Position zu bewegen,
**dadurch gekennzeichnet, dass**
die Anzeigevorrichtung (9-12) eine Anzeigefläche (27) und eine Umrandung (19) aufweist, welche die Anzeigefläche (27) zumindest teilweise umgibt, wobei die Anzeigefläche (27) in der zweiten Position aus der Umrandung (19) hervorragt, wobei ein seitlicher Rand (18) der Anzeigefläche (27) zwischen der Anzeigefläche (27) und der Umrandung (19) verläuft, wobei der seitliche Rand (18) ein Leuchtmittel umfasst, das in Abhängigkeit von dem Betriebszustand des Fahrzeugs (26) ansteuerbar ist.

4. Anzeigevorrichtung nach Anspruch 3, **dadurch gekennzeichnet, dass** die Steuervorrichtung mit dem Leuchtmittel gekoppelt und derart ausgestaltet ist, dass sie das Leuchtmittel in Abhängigkeit von einem Betrieb eines Blinkers des Fahrzeugs (26) ansteuert.

5. Anzeigevorrichtung nach Anspruch 3oder 4, wobei die Anzeigevorrichtung (9-12) zur Durchführung des Verfahrens nach Anspruch 1 oder 2 ausgestaltet ist.

6. Fahrzeug, umfassend:
- ein Kombiinstrument (2) und
- eine Anzeigevorrichtung (9-12) nach einem der Ansprüche 3 bis 5, welche benachbart zu dem Kombiinstrument (2) angeordnet ist.

7. Fahrzeug nach Anspruch 6, wobei die Anzeigefläche (27) der Anzeigevorrichtung (9-12) quer zu einer Anzeigefläche des Kombiinstruments (2) beweglich ist.

## Claims

1. Method for a display device for a vehicle, wherein the display device (9-12) comprises a display surface (27) which can be moved between a first position and a second position, wherein the method comprises:
- detecting an operating state of the vehicle (26), and
- automatically moving the display surface (27) into the first position or into the second position as a function of the detected operating state of the vehicle (26),
**characterized in that**
the display device (9-12) has a border (19) which at least partially surrounds the display surface (27), wherein in the second position the display surface (27) projects out of the border (19), wherein in the second position a lateral edge (18) of the display surface (27) runs between the display surface (27) and the border (19), wherein the lateral edge (18) comprises a lighting means, wherein the method also comprises:
- actuating the lighting means as a function of the operating state of the vehicle (26).

2. Method according to Claim 1, wherein the lighting means is actuated as a function of an operation of a flashing direction indicator light of the vehicle (26).

3. Display device for a vehicle, comprising:
- a display surface (27) which can be moved between a first position and a second position,
- a drive unit (23) which is coupled to the display surface (27) and is configured to move the display surface (27) optionally into the first or second position, and
- a control device which is coupled to the drive unit (23) and is configured to detect an operating state of the vehicle (26) and to actuate the drive unit (23), as a function of the detected operating state of the vehicle (26), in order to move the display surface (27) into the first position or into the second position,
**characterized in that**
the display device (9-12) has a display surface (27) and a border (19) which at least partially surrounds the display surface (27), wherein in the second position the display surface (27) projects out of the border (19), wherein a lateral edge (18) of the display surface (27) runs between the display surface (27) and the border (19), wherein the lateral edge (18) comprises a lighting means which can be actuated as a function of the operating state of the vehicle (26).

4. Display device according to Claim 3, **characterized in that** the control device is coupled to the lighting means and is configured in such a way that it actuates the lighting means as a function of an operation of a flashing direction indicator light of the vehicle (26).

5. Display device according to Claim 3 or 4, wherein the display device (9-12) is configured to carry out the method according to Claim 1 or 2.

6. Vehicle, comprising:
- a combination instrument (2) and
- a display device (9-12) according to one of Claims 3 to 5, which display device (9-12) is arranged adjacent to the combination instrument (2).

7. Vehicle according to Claim 6, wherein the display surface (27) of the display device (9-12) can be moved transversally with respect to a display surface of the combination instrument (2).

## Revendications

1. Procédé, destiné à un dispositif d'affichage d'un véhicule, le dispositif d'affichage (9 à 12) comprenant une surface d'affichage (27) laquelle est mobile entre une première position et une deuxième position, le procédé comprenant :
- la détection d'un état de service du véhicule (26), et
- le déplacement automatique de la surface d'affichage (27) dans la première position ou dans la deuxième position en fonction de l'état de service détecté du véhicule (26),
**caractérisé en ce que** le dispositif d'affichage (9 à 12) comporte une bordure (19) laquelle entoure au moins partiellement la surface d'affichage (27), dans la deuxième position, la surface d'affichage (27) saillant hors de la bordure (19), dans la deuxième position, un bord latéral (18) de la surface d'affichage (27) s'écoulant entre la surface d'affichage (27) et la bordure (19), le bord latéral (18) comprenant un moyen lumineux, le procédé comprenant par ailleurs :
- l'activation du moyen lumineux en fonction de l'état de service du véhicule (26).

2. Procédé selon la revendication 1, le moyen lumineux étant activé en fonction d'un fonctionnement d'un clignotant du véhicule (26).

3. Dispositif d'affichage destiné à un véhicule, comprenant :
- une surface d'affichage (27), laquelle est mobile entre une première position et une deuxième position,
- un module d'entraînement (23), lequel est accouplé avec la surface d'affichage (27) et est conçu pour déplacer la surface d'affichage (27) au choix, dans la premier ou dans la deuxième position et
- un dispositif de commande, lequel est accouplé avec le module d'entraînement (23) et est conçu pour détecter un état de service du véhicule (26) et en fonction de l'état de service détecté du véhicule (26), pour activer le module d'entraînement (23), pour déplacer la surface d'affichage (27) dans la première position ou dans la deuxième position,
**caractérisé en ce que** le dispositif d'affichage (9 à 12) comporte une surface d'affichage (27) et une bordure (19) laquelle entoure au moins partiellement la surface d'affichage (27), dans la deuxième position, la surface d'affichage (27) saillant hors de la bordure (19), dans la deuxième position, un bord latéral (18) de la surface d'affichage (27) s'écoulant entre la surface d'affichage (27) et la bordure (19), le bord latéral (18) comprenant un moyen lumineux, qui est activable en fonction de l'état de service du véhicule (26).

4. Dispositif d'affichage selon la revendication 3, **caractérisé en ce que** le dispositif de commande est accouplé avec le moyen lumineux, et conçu de sorte à activer le moyen lumineux en fonction d'un fonctionnement d'un clignotant du véhicule (26).

5. Dispositif d'affichage selon la revendication 3 ou 4, le dispositif d'affichage (9 à 12) étant conçu pour réaliser le procédé selon la revendication 1 ou 2.

6. Véhicule, comprenant :
- un instrument mixte (2) et
- un dispositif d'affichage (9 à 12) selon l'une quelconque des revendications 3 à 5, lequel est placé au voisinage de l'instrument mixte (2).

7. Véhicule selon la revendication 6, la surface d'affichage (27) du dispositif d'affichage (9 à 12) étant mobile à la transversale d'une surface d'affichage de l'instrument mixte (2).
